# EUROPEAN PATENT APPLICATION

(11) **EP 4 841 252 A1**
(43) Date of publication of application: **18.11.2026**
(21) Application number: 24916861.8
(22) Date of filing: 27.12.2024
(51) Int. Cl.: G01N 27/333, G01N 27/416

(54) **METHOD FOR MANUFACTURING PH SENSITIVE ELECTRODE, MEASURING METHOD EMPLOYING PH SENSITIVE ELECTRODE, MEASURING DEVICE, AND PH SENSITIVE ELECTRODE**

(30) Priority: 10.01.2024 JP 2024002096
(71) Applicant: Hitachi High-Tech Corporation, Minato-ku Tokyo 105-6409 (JP)
(72) Inventor: YOSHIDA Hiroshi, Tokyo 105-6409 (JP); TABATA Miyuki, Fuchu-shi, Tokyo 183-8538 (JP); MIYAHARA Yuji, Tokyo 152-8550 (JP); SUGIMURA Yoshiaki, Tokyo 105-6409 (JP); YAMASHITA Nanae, Tokyo 105-6409 (JP); NEGISHI Yoshinori, Tokyo 105-6409 (JP); SAITO Toshiro, Tokyo 105-6409 (JP)
(74) Representative: MERH-IP Matias Erny Reichl Hoffmann Patentanwälte PartG mbB
(86) International application number: PCT/JP2024/046498
(87) International publication number: WO 2025/150458

(57) **Abstract**

Provided are a method for manufacturing a pH sensitive electrode and a measuring method employing a pH sensitive electrode that achieve at least one of suppression of an electromotive force drift during pH measurement and a high response speed, while allowing such a feature to be easily obtained. The method for manufacturing the pH sensitive electrode according to the present invention includes a manufacturing step of manufacturing a composite electrode made of iridium and iridium oxide by thermal oxidation treatment, and a first application step of applying a voltage to the composite electrode in a state where the composite electrode and a counter electrode facing the composite electrode are immersed in a solution so as to maintain a negative state with respect to the counter electrode.

## Description

### Technical Field

The present invention relates to a method for manufacturing a pH sensitive electrode, a measuring method employing a pH sensitive electrode, a measuring device, and a pH sensitive electrode.

### Background Art

As an example of a background art for the present invention, Patent Literature 1 describes an indicator electrode for a pH sensor that includes a substrate, an electrode disposed on the substrate, a reactive layer disposed on a portion of the electrode, and a conductive layer disposed on a reactive material. Patent Literature 1 describes that the reactive layer is made of iridium/iridium oxide or the like. Patent Literature 1 describes that, before the conductive polymer is deposited (electropolymerized) as the conductive layer on the reactive layer, charge can be attached with, e.g., a voltage of about -0.5 V to about 1.0 V at 50 mV/second.

### Citation List

### Patent Literature

Patent Literature 1: Japanese Unexamined Patent Application Publication (Translation of PCT Application) No. 2017-532571

### Summary of Invention

### Technical Problem

The attachment of the charge to a surface of the reactive layer in the indicator electrode for a pH sensor described in Patent Literature 1, i.e., activation needs only to allow the conductive layer to be deposited on the reactive layer surface by electropolymerization, e.g., allow an improvement of bonding between the reactive layer and the conductive layer. Accordingly, the voltage is applied over a range including positive values, such as from about -0.5 V to about 1.0 V.

It is known that, when the pH value of a solution is measured using a composite electrode made of iridium/iridium oxide produced by thermal oxidation treatment, an electromotive force drifts with time. It is also known that such a composite electrode has a low response speed to a pH change. As a result of conducting various examination, the present inventors have found that applying voltages having values in a positive range to the composite electrode made of iridium/iridium oxide cannot solve problems such as the electromotive force drift and low response speed mentioned above. The electromotive force drift mentioned above can be improved by immersing the composite electrode in water or an aqueous solution for several tens of days, but there has been a problem in that processing requires a long time period, and is not simple.

The present invention has been achieved in view of the above circumstances. The present invention addresses the problem of providing a method for manufacturing a pH sensitive electrode, a measuring method, a measuring device, and a pH sensitive electrode that achieve at least one of suppression of an electromotive force drift during pH measurement and a high response speed, while allowing such a feature to be easily obtained.

### Solution to Problem

A manufacturing method for a pH sensitive electrode according to the present invention, which has solved the problem mentioned above, includes: a manufacturing step of manufacturing a composite electrode made of iridium and iridium oxide by thermal oxidation treatment; and a first application step of applying a voltage to the composite electrode in a state where the composite electrode and a counter electrode facing the composite electrode are immersed in a solution so as to maintain a negative state with respect to the counter electrode.

### Advantageous Effects of Invention

The present invention can provide a method for manufacturing a pH sensitive electrode, a measuring method, a measuring device, and a pH sensitive electrode that achieve at least one of suppression of an electromotive force drift during pH measurement and a high response speed, while allowing such a feature to be easily obtained.

### Brief Description of Drawings

[Fig. 1] A schematic configuration diagram illustrating an inner configuration of a chamber 2 in a measuring device 1.
[Fig. 2] A graph (upper diagram) illustrating a pH response of an Ir/IrOₓ microelectrode (Comparative Example 1) with a diameter of 0.127 mm immediately after being produced (immersed for 0 days).
[Fig. 3] An optical microscope photograph obtained by photographing Ir wires with polished end surfaces from side surfaces thereof.
[Fig. 4] An optical microscope photograph obtained by photographing Ir wires with unpolished (non-polished) end surfaces from side surfaces thereof.
[Fig. 5] A graph (upper diagram) illustrating a pH response of an Ir/IrOₓ microelectrode (Comparative Example 2) with a diameter of 0.127 mm after being immersed in pure water for 33 days.
[Fig. 6] A graph illustrating temporal variations of electromotive forces at a time point after a lapse of 267 days.
[Fig. 7] A graph illustrating temporal variations of electromotive force drifts in a pH 4 buffer solution.
[Fig. 8] A graph illustrating temporal variations of electromotive force drifts in a pH 9 buffer solution.
[Fig. 9] A graph illustrating the electromotive force responses of Ir/IrOₓ microelectrodes stored in water for 267 days.
[Fig. 10] A graph illustrating the pH responses of the Ir/IrOₓ microelectrodes stored in water for 267 days.
[Fig. 11A] A graph illustrating a voltage application effect (positive electrode application) on an electromotive force drift in a pH 4 buffer solution.
[Fig. 11B] A graph illustrating a voltage application effect (negative electrode application) on the electromotive force drift in the pH 4 buffer solution.
[Fig. 12A] A graph illustrating a voltage application effect (positive electrode application) on an electromotive force drift in a pH 9 buffer solution.
[Fig. 12B] A graph illustrating a voltage application effect (negative electrode application) on the electromotive force drift in the pH 9 buffer solution.
[Fig. 13] A graph illustrating a durability of the voltage application effect in the pH 4 buffer solution.
[Fig. 14] A graph representing a durability of the voltage application effect in the pH 9 buffer solution.
[Fig. 15] A graph illustrating a voltage application effect on the electromotive force drift of the Ir/IrOₓ microelectrode in the pH 4 buffer solution.
[Fig. 16] A graph illustrating a voltage application effect on the electromotive force drift of the Ir/IrOₓ microelectrode in the pH 9 buffer solution.
[Fig. 17] A graph illustrating a voltage application effect on the electromotive force of the Ir/IrOₓ microelectrode in the pH 7 buffer solution.
[Fig. 18] A graph illustrating a result of comparing different pH responses of the Ir/IrOₓ microelectrode.
[Fig. 19] A graph illustrating a variation of a 90% response time at the time of a change from pH 7 to pH 4.
[Fig. 20] A graph illustrating the variation of the 90% response time at the time of a change from pH 7 to pH 9.
[Fig. 21] A plot diagram illustrating a result of a change from pH 7 to pH 4.
[Fig. 22] A plot diagram illustrating a result of a change from pH 7 to pH 9.
[Fig. 23] A spectrum diagram illustrating a result of an X-ray photoelectron spectroscopy (XPS) analysis of an iridium oxide film without voltage application.
[Fig. 24] A spectrum diagram illustrating an XPS spectra from Ir/IrOₓ microelectrodes to which a -1.5 V voltage was applied for 0 minutes, 5 minutes, 10 minutes, 20 minutes, and 40 minutes.
[Fig. 25] A graph illustrating a relationship between an electromotive force and pH shown by each of Ir/IrOₓ microelectrodes.

### Description of Embodiments

Referring to the drawings as appropriate, a detailed description will be given below of a method for manufacturing a pH sensitive electrode, a measuring method employing a pH sensitive electrode, a measuring device, and a pH sensitive electrode.

Note that, in the description of each of embodiments, substantially the same or similar components are denoted by the same reference signs, and a repeated description may be omitted.

### [Method for Manufacturing pH Sensitive Electrode]

A method for manufacturing a pH sensitive electrode according to the present embodiment (which may be hereinafter referred to also as the present manufacturing method) includes a manufacturing step and a first application step.

### (Manufacturing Step)

In the manufacturing step, a composite electrode made of iridium (Ir) and iridium oxide (IrOₓ) is manufactured by thermal oxidation treatment.

The thermal oxidation treatment refers to treatment of performing heating under atmospheric conditions in which oxygen exists, such as under an atmospheric environment, to oxidize at least a surface of target iridium. Specifically, the composite electrode has a configuration in which the surface of metal iridium is covered with iridium oxide formed by the thermal oxidation treatment.

Note that the composite electrode need not be formed entirely of iridium. The composite electrode may also be a coating made of iridium or iridium oxide to serve as an active layer, which is formed on a surface of a wire, a substrate, or the like made of metal other than iridium such as, e.g., gold, silver, copper, or iron. In such a mode also, the surface of the composite electrode is covered with the coating made of iridium or iridium oxide, and accordingly at least one of the effects of suppressing the electromotive force drift during pH measurement and providing a high response speed can be obtained. In addition, in this mode, the coating mentioned above is obtained only by performing thermal oxidation treatment in the manufacturing steps after forming a coting made of Ir on the surface of the wire, the substrate, or the like, and therefore it is possible to easily obtain the composite electrode having the effect described above.

The formation of the coating made of Ir prior to the manufacturing steps can be performed on the surface of the wire or the like by, e.g., physical vapor deposition (PVD), plating, or the like.

The thermal oxidation treatment can be performed, for example, as follows, but is not limited thereto.
1. The electrode made of Ir is ultrasonically cleaned with acetone for 10 minutes twice. (Heating of an oven is started to 750 °C.)
2. The electrode made of Ir is ultrasonically cleaned with ethanol for 10 minutes twice.
3. The electrode made of Ir is ultrasonically cleaned with ultrapure water for 10 minutes twice.
4. Water on the surface of the electrode made of Ir is wiped off with Kimwipes and, after drying, a gold boat is placed in a ceramic vessel, and the electrode made of Ir obtained in Steps 1 to 3 is placed thereon.
5. On the electrode, lithium carbonate (Li₂CO₃) powder is thinly layered as a catalyst and, after placing the electrode in the oven heated to a predetermined temperature, thermal oxidation is performed thereon in air for a predetermined time period.
6. After a lapse of 3 hours, the electrode is cooled in the oven and, after the temperature in the oven returns to approximately room temperature, the electrode is taken out.
7. The gold boat carrying the electrode is placed in a beaker filled with ultrapure water, and melted and solidified Li₂CO₃ is dissolved, while stirring is performed with a stirrer.
8. After the dissolution of Li₂CO₃, the composite electrode is taken out and dried.

In the thermal oxidation treatment described above, the predetermined temperature is preferably set to, e.g., 723 to 1000 °C, and more preferably set to 750 °C.

Meanwhile, in the thermal oxidation treatment described above, the predetermined time period is preferably set to, e.g., 15 minutes to 4 hours, and more preferably set to 30 minutes to 150 minutes. As a specific example of the predetermined time period, e.g., 15 minutes, 30 minutes, 45 minutes, 60 minutes, 150 minutes, or the like is preferable.

Preferably, the surface of the composite electrode is polished before the thermal oxidation treatment described above is performed. This can prevent/reduce trouble such as cracking of the surface during the thermal oxidation treatment. Examples of the polishing that can be listed include polishing with sandpaper, followed by polishing with diamond grains with a diameter of 1 µm, but the polishing is not limited thereto.

Examples of the composite electrode that can be used include a wire-shaped composite electrode with a diameter of 0.1 mm to 1 mm, but the composite electrode is not limited thereto. For example, a rod-shaped or thin-film-shaped composite electrode may also be used. Alternatively, the composite electrode may also be a composite electrode in which the coating is used as the active layer for pH, while being layered on the substrate or wire.

### (First Application Step)

In a first application step, in a state where the composite electrode after being subjected to the thermal oxidation treatment and a counter electrode facing the composite electrode are immersed in a solution, a voltage is applied to the composite electrode so as to maintain a negative state with respect to the counter electrode. On the surface of the composite electrode after being subjected to the thermal oxidation treatment, tetravalent iridium (IrO₂) is mainly generated as the iridium oxide but, by performing this step, a portion thereof can easily be changed to trivalent iridium (Ir₂O₃).

Specifically, it is preferable that the composite electrode after the first application step has an Ir^{IV}/Ir^{III} ratio of 1.15 or less at at least a surface thereof when, of the iridium oxide, tetravalent iridium (IrO₂) is Ir^{IV} and trivalent iridium (Ir₂O₃) is Ir^{III}. By adjusting the Ir^{IV}/Ir^{III} ratio to 1.15 or less, at least one of the effects of suppressing the electromotive force drift in the pH measurement and providing the high response speed can be obtained. Considerations about the obtention of such effects will be described in the section "Examples".

When the voltage is applied, charge of the polarity opposite to that of charge flowing in the composite electrode flows in the counter electrode. As the counter electrode, any electrode that can exert the effect described above on the composite electrode can be used. Examples of such a counter electrode that can be listed include a platinum (Pt) electrode, a gold (Au) electrode, and the like, but the counter electrode is not limited thereto.

The solution is preferably a buffer solution at, e.g., pH 4 to pH 9, and more preferably a pH 7 buffer solution. Preferably, the buffer solution is, e.g., a phosphate buffer solution.

For example, the voltage in the first application step is preferably -1 V to -2 V, and more preferably -1.25 V to -1.75 V. Specifically, the voltage can be set to, e.g., - 1.0 V, -1.25 V, -1.5 V, -1.75 V, -2.0 V, or the like, but -1.5 V is more preferable.

For example, the voltage application time period in the first application step is preferably 2 minutes to 90 minutes, and more preferably 5 minutes to 60 minutes. Preferably, the application time period is set to, e.g., 2 minutes, 5 minutes, 10 minutes, 20 minutes, 60 minutes, 90 minutes, or the like, but the application time period is not limited thereto.

According to the present manufacturing method, by performing the manufacturing steps and first application step described above, it is possible to manufacture the pH sensitive electrode with which at least one of the effects of suppressing the electromotive force drift during the pH measurement and providing a high response speed could be obtained. Thus, according to the present manufacturing method, by merely performing these steps, it is possible to manufacture such a pH sensitive electrode. Accordingly, compared to a prior art technology requiring a long period for treatment of immersing a composite electrode in water or an aqueous solution for several tens of days to improve the composite electrode, the present manufacturing method allows the pH sensitive electrode described above to be easily manufactured.

The pH sensitive electrode manufactured by the present manufacturing method can appropriately be used in a range of pH 4 to pH 13 (i.e., can show a stable pH response). The pH sensitive electrode manufactured by the present manufacturing method shows a linear response in the range of pH 4 to pH 13, and an inclination of a measured electromotive force with respect to a pH change substantially coincides with a theoretical value. The pH sensitive electrode manufactured by the present manufacturing method has a response speed to a pH change, which is of a sub-second order. Such characteristics will be described in the section "Examples". The pH sensitive electrode manufactured by the present manufacturing method can retain the various effects described above for several weeks (e.g., about two weeks).

### [Measuring method Employing pH Sensitive Electrode]

The measuring method employing the pH sensitive electrode according to the present embodiment (which may be hereinafter referred to also as the present measuring method) includes a second application step.

In the second application step, before measuring the pH of a measurement target by using the composite electrode made of iridium and iridium oxide, which was manufactured by the thermal oxidation treatment, a voltage is applied to the composite electrode in a state where the composite electrode and the counter electrode facing the composite electrode are immersed in a solution so as to maintain a negative state with respect to the counter electrode.

In other words, the second application step of the present measuring method is performed so as to adjust the surface of the composite electrode before the pH of the measurement target is measured by using the already manufactured composite electrode (which is preferably the pH sensitive electrode manufactured by the present manufacturing method described above). By contrast, the firs application step in the present manufacturing method described above is different from the second application step in that the first application step is performed during first manufacturing of the composite electrode.

By performing the second application step, the composite electrode (pH sensitive electrode) can be brought into a state where the Ir^{IV}/Ir^{III} ratio is 1.15 or less at at least the surface thereof when, of the iridium oxide, tetravalent iridium (IrO₂) is Ir^{IV} and trivalent iridium (Ir₂O₃) is Ir^{III}.

The composite electrode (pH sensitive electrode) manufactured by the first application step and the composite electrode having the surface adjusted by the second application step can retain the various effects described above with reference to the present manufacturing method for several weeks (e.g., about two weeks).

The second application step can be performed as appropriate when it is determined that the various effects described above have been deteriorating. In addition, the second application step can be performed at appropriate timing such as during maintenance performed on a measuring device using the composite electrode (pH sensitive electrode), e.g., every two weeks.

Various conditions in the second application step, such as the counter electrode, the solution, the voltage, and the voltage application time period are the same as those in the first application step described above, and therefore a description thereof is omitted.

The measurement target can be any liquid having measurable pH. Examples of the measurement target that can be listed include a cell culture solution, an aqueous solution, waste liquid, or an effluent containing a specific chemical substance, drinking water, a beverage, a solution/suspension containing a cell or biological sample, blood, and the like, but the measurement target is not limited thereto.

### [Measuring Device]

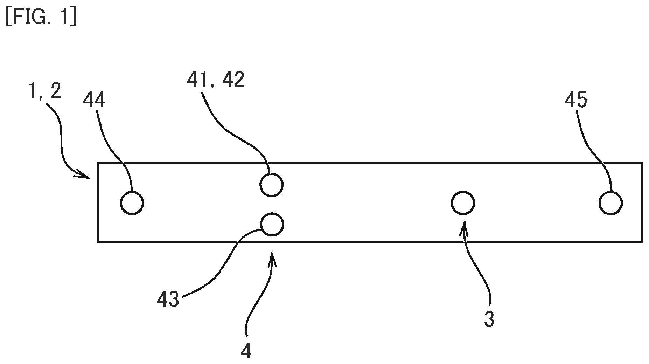

Fig. 1 is a schematic configuration diagram illustrating an inner configuration of a chamber 2 in a measuring device 1.

As shown in Fig. 1, the measuring device 1 according to the present embodiment includes, in the vicinity of a center in the same chamber 2, a first measuring unit 3 and a second measuring unit 4.

Regarding the measuring device 1, there is a measuring device that measures the quantity of a substance by allowing a specific chemical substance, a biological sample, a cell, or the like serving as the measurement target to flow, such as, e.g., a surface plasmon resonance (SPR) device. Such a measuring device has a minute space serving as a measurement region, and the minute space corresponds to the chamber 2 described above. For example, the inner portion of the chamber 2 has a length of about 20 mm, a width of about 2 mm, a flow path height of about 0.5 mm. The chamber 2 has an inlet 44 for introducing the measurement target at one end portion thereof in a longitudinal direction. The chamber 2 has an outlet 45 for discharging the measurement target at another end portion in the longitudinal direction. The measurement target is introduced into the chamber 2 from the inlet 44 to be discharged from the outlet 45 to the outside of the chamber 2 after passing through the second measuring unit 4 and the first measuring unit 3.

The first measuring unit 3 measures components of the substance contained in the measurement target. The substance contained in the measurement target may be any that can be subjected to measurement using the first measuring unit 3, and various substances such as a specific chemical substance, protein, and an antibody can be listed.

In other words, in the measuring device 1 according to the present embodiment, the measurement target and an intended application thereof are specified to an extent by the first measuring unit 3. Examples of the measuring device 1 according to the present embodiment that can appropriately be listed include a bio measuring device such as the SPR device mentioned above.

The second measuring unit 4 measures the pH of the measurement target. The second measuring unit 4 includes a composite electrode 41 (pH sensitive electrode 42) made of iridium and iridium oxide and a counter electrode 43 facing the composite electrode 41. The measurement target and the counter electrode 43 are exactly as described above.

The first measuring unit 3 and the second measuring unit 4 may also be disposed at the same place. Preferably, the first measuring unit 3 and the second measuring unit 4 are disposed as close as possible to each other, since this allows the pH of a measuring unit to be measured.

Preferably, the composite electrode 41 has an Ir^{IV}/Ir^{III} ratio of 1.15 or less at at least the surface thereof when, of the iridium oxide, tetravalent iridium (IrO₂) is Ir^{IV} and trivalent iridium (Ir₂O₃) is Ir^{III}. The composite electrode 41 can be acquired/maintained by being manufactured by the present manufacturing method described above or by having the surface thereof adjusted by the present measuring method.

Therefore, the measuring device 1 according to the present embodiment that includes the second measuring unit 4 can obtain at least one of the effects of suppressing the electromotive force drift during the pH measurement and providing a high response speed.

In addition, the measuring device 1 according to the present embodiment can appropriately measure pH (i.e., exhibits a stable pH response) in the range of pH 4 to pH 13. The measuring device 1 according to the present embodiment shows a linear response in the range of pH 4 to pH 13, and an inclination of a measured electromotive force with respect to a pH change substantially coincides with a theoretical value. The measuring device 1 according to the present embodiment has a response speed to a pH change, which is of a sub-second order. The measuring device 1 according to the present embodiment can retain the various effects described above for several weeks (e.g., about two weeks).

Note that, when the first measuring unit 3 described above is not allowed to function, the measuring device 1 according to the present embodiment can be used as a mere pH measuring device.

Note that the measuring device, such as the SPR device mentioned above, has a problem in that, since the measurement region is the minute space (chamber 2), it is extremely difficult to measure pH within the chamber 2. For such a measuring device, there is a demand to perform real-time monitoring of the pH within the chamber 2. For such a measuring device, there is also a demand to perform in-situ online monitoring if possible. The measuring device 1 according to the present embodiment has the composite electrode 41 (pH sensitive electrode 42) having the configuration described above, and achieves the various effects described above, and can therefore address these problems and demands.

### [pH Sensitive Electrode]

The pH sensitive electrode 42 according to the present embodiment is the composite electrode 41 made of iridium and iridium oxide. The pH sensitive electrode 42 according to the present embodiment has an Ir^{IV}/Ir^{III} ratio of 1.15 or less at at least a surface thereof when, of the iridium oxide, tetravalent iridium (IrO₂) is Ir^{IV} and trivalent iridium (Ir₂O₃) is Ir^{III}. The composite electrode 41 can be acquired/maintained by being manufactured by the present manufacturing method described above or by having the surface thereof adjusted by the present measuring method.

Due to the configuration thereof described above, the pH sensitive electrode 42 according to the present embodiment can achieve at least one of the effects of suppressing the electromotive force drift during the pH measurement and providing the high response speed.

In addition, the pH sensitive electrode 42 according to the present embodiment can appropriately measure the pH in the range of pH 4 to pH 13 (i.e., can exhibit a stable pH response). The pH sensitive electrode 42 according to the present embodiment shows a linear response in the range of pH 4 to pH 13, and an inclination of a measured electromotive force with respect to a pH change substantially coincides with a theoretical value. The pH sensitive electrode 42 according to the present embodiment has a response speed to a pH change, which is of a sub-second order. The pH sensitive electrode 42 according to the present embodiment can retain the various effects described above for several weeks (e.g., about two weeks).

In the pH sensitive electrode 42 according to the present embodiment, the band energy structure of iridium oxide preferably has an energy level unoccupied with electrons at a position 1 eV higher than the Fermi level. By having the energy level unoccupied with electrons, electron exchange is easily performed via the energy level. As a result, the pH sensitive electrode 42 according to the present embodiment can more reliably suppress the electromotive force drift during the pH measurement described above, and more reliably improve the response speed.

In addition, in the pH sensitive electrode 42 according to the present embodiment, an average film thickness of the iridium oxide is preferably 5 µm or less. This provides an appropriate average film thickness of the iridium oxide, and consequently the coating of the iridium oxide is less likely to be peeled from the surface of the pH sensitive electrode 42. Therefore, the pH sensitive electrode 42 can achieve the various effects described above over a longer period.

### Examples

Next, using Examples, details of the present invention will be described more specifically.

### (1) Comparative Examples

### (1-1) Comparative Examples 1 and 2

The present inventors produced Comparative Examples 1 and 2 as follows. The following is the description of the outline of Comparative Examples 1 and 2.

Comparative Example 1 was obtained by producing an iridium/iridium oxide (Ir/IrOₓ) microelectrode, i.e., a pH sensitive electrode by performing thermal oxidation treatment on an iridium (Ir) thin wire.

Comparative Example 2 was obtained by immersing the Ir/IrOₓ microelectrode in Comparative Example 1 in pure water for 33 days.

### (1-2) Reagent and Material

In the present examination, for the conditioning of the produced IrOₓ electrode, ultrapure water was used. In addition, for the measurement of a pH response, pH 4, pH 7, and pH 9 standard solutions (pH Standard Solution Set 101S, HORIBA, Ltd., Japan), as well as a selfprepared pH 7 buffer solution (NPBS) and a pH 13 KOH solution (HPCS) were used. The IrOₓ was produced by placing iridium wires (diameters: 1 mm and 0.127 mm; purity: 99.9%; Nilaco Corporation, Japan) together with Li₂CO₃ powder (anhydrous; purity: 99.9%; Wako Pure Chemical Industries, Japan) in an electric oven, melting Li₂CO₃, and performing thermal oxidation.

### (1-3) Production of Ir/IrOₓ Microelectrode

The iridium wires (Ir wires) with the diameters of 1 mm and 0.127 mm were cut with a nipper, and then the end surfaces thereof were polished. Each of the Ir wires having a length of about 20 mm was held between pieces of wood (hinoki cypress), fixed with screws, and polished with sandpaper and diamond grains with a diameter of 1 µm.

The Ir wires were thermally oxidized by using the electric oven according to the following protocol.
1. The Ir wires were ultrasonically cleaned with acetone for 10 minutes twice. (Heating of an oven is started to 750 °C.)
2. The Ir wires were ultrasonically cleaned with ethanol for 10 minutes twice.
3. The Ir wires were ultrasonically cleaned with ultrapure water for 10 minutes twice.
4. The water on the surfaces of the Ir wires was wiped off with Kimwipes and, after drying, a gold boat was placed in a ceramic vessel, and the Ir wires obtained in Steps 1 to 3 were placed thereon.
5. On the Ir wires, lithium carbonate (Li₂CO₃) powder was thinly layered and, after placing the Ir wires in the oven heated to 750 °C, thermal oxidation was performed thereon in air for 2.5 hours.
6. After a lapse of 3 hours, the Ir wires were cooled in the oven and, after the temperature in the oven returned to approximately room temperature, the Ir wires were taken out.
7. The gold boat carrying the Ir wires after being subjected to thermal oxidation treatment was placed in a beaker filled with ultrapure water, and melted and solidified Li₂CO₃ was dissolved, while stirring is performed with a stirrer.
8. After the dissolution of Li₂CO₃, the composite electrodes (Iᵣ/IrOₓ wires) were taken out and dried to produce the Ir/IrOₓ microelectrodes.

### (1-4) pH Response Evaluation System

The pH responses of the produced Ir/IrOₓ microelectrodes were batchwise evaluated. In this evaluation, the Ir/IrOₓ microelectrodes and a reference electrode were connected to an electrometer (Keithley, 6417 model), and temporal variations of electromotive forces were measured using order-made measurement software.

### (1-5) Results and Considerations for Comparative Examples 1 and 2

The present inventors thermally oxidized the Ir/IrOₓ microelectrodes with the diameters of 1 mm and 0.127 mm by using molten lithium carbonate at 750 °C for 150 minutes, and measured pH responses thereof over time, while immersing the Ir/IrOₓ microelectrodes in ultrapure water for storage.

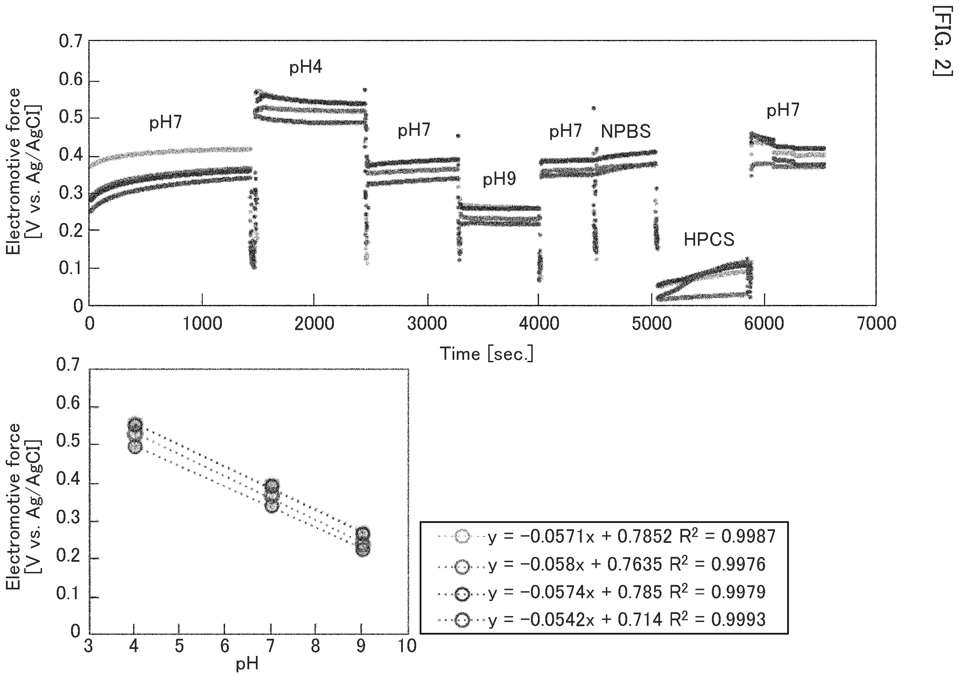

Fig. 2 is a graph (upper diagram (of Fig. 2 in a horizontal layout)) illustrating the pH response of the Ir/IrOₓ microelectrode with the dimeter of 0.127 mm (Comparative Example 1) immediately after being produced (immersed for 0 days). In the drawing, the abscissa axis represents Time (sec.), and the ordinate axis represents Electromotive force (V vs. Ag/AgCl). Note that the lower left graph in the drawing is a graph representing the magnitudes of electromotive forces with respect to pH for the four Ir/IrOₓ microelectrodes produced under the same conditions. In the drawing, the abscissa axis represents pH, and the ordinate axis represents Electromotive force (V vs. Ag/AgCl). In the drawing, the respective calibration lines (y=-0.0571x+0.7852, y=-0.058x+0.7635, y=-0.0574x+0.785, and y=-0.0542x+0.714) and the respective coefficients of determination thereof (R²=0.9987, R²=0.9976, R²=0.9979, and R²=0.9993) in the graph are also shown.

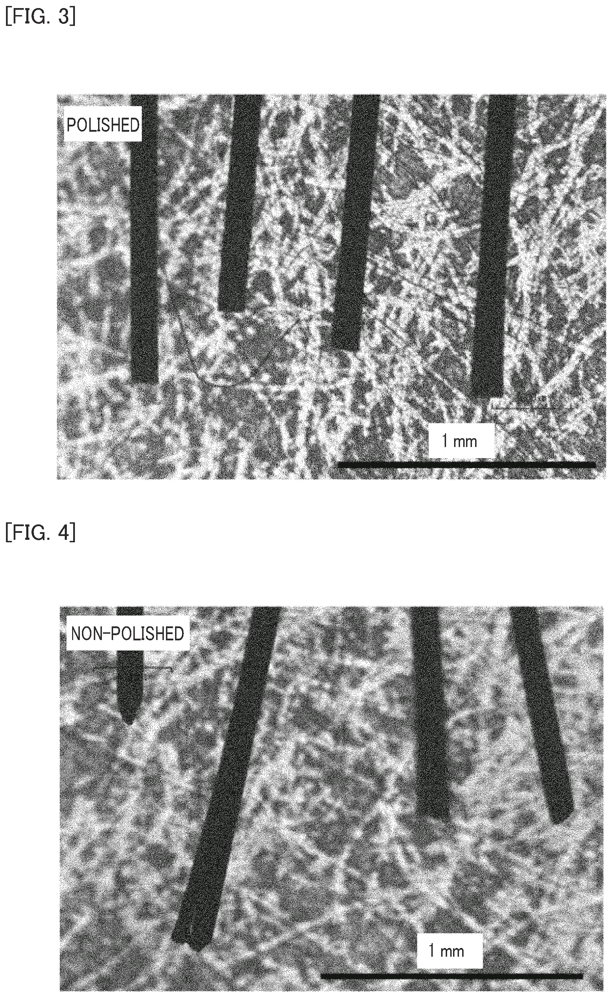

Fig. 3 is an optical microscope photograph obtained by photographing Ir wires with polished end surfaces from side surfaces thereof. Fig. 4 is an optical microscope photograph obtained by photographing Ir wires with unpolished (non-polished) end surfaces from side surfaces thereof. From Fig. 3 and Fig. 4, it can be understood that the planarity of a cut surface is improved by end surface machining. The pH response used the surface subjected to the end surface machining as the pH electrode.

In Fig. 2, when the pH of the solution is varied from 7→4→7→9→7, the electromotive forces vary. The electromotive forces when the Ir wires were immersed in the solutions with different pH values exhibited drifts, and it can be seen that the electromotive forces required time to be stabilized. It will be understood that the electromotive force drifts when the Ir wires were immersed in a pH 13 HPCS solution were particularly large.

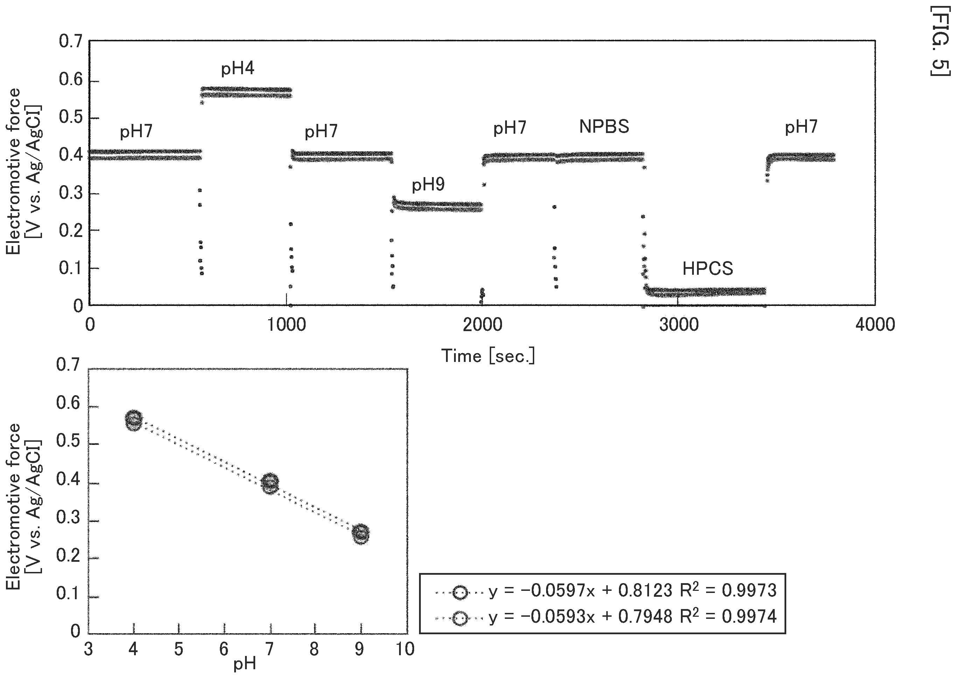

The present inventors continuously immersed the two Ir/IrOx microelectrodes produced under the same conditions in the ultrapure water, and similarly measured the temporal variations of the pH responses. Fig. 5 is graph (upper diagram (of Fig. 5 in a horizontal layout)) representing the pH response of the Ir/IrOₓ microelectrode with the dimeter of 0.127 mm (Comparative Example 2) after immersion in pure water for 33 days. In the drawing, the abscissa axis represents Time (sec.), and the ordinate axis represents Electromotive force (V vs. Ag/AgCl). Note that the lower left graph in the drawing is a graph representing the magnitudes of the electromotive forces with respect to pH for the two Ir/IrOₓ microelectrodes produced under the same conditions. In the drawing, the abscissa axis represents pH, and the ordinate axis represents Electromotive force (V vs. Ag/AgCl). In the drawing, the respective calibration lines (y=-0.0597x+0.8123 and y=-0.0593x+0.7948) and the respective coefficients of determination (R²=0.9973 and R²=0.9974) in the graph are also shown.

As shown in Fig. 5, it can be seen that, after immersion in pure water for 33 days, the electromotive force drifts were sufficiently small, and the stable pH responses were obtained.

Note that, for the Ir/IrOₓ microelectrode with the diameter of 1 mm also, the same results were obtained both immediately after production and after immersion in pure water for 33 days (not shown).

### (1-6) Long-Term Stabilities of Ir/IrOₓ Microelectrodes

The present inventors continuously immersed the two above-mentioned Ir/IrOₓ microelectrodes with the diameters of 0.127 mm in the ultrapure water for storage, and intermittently measured the pH responses to evaluate the long-term stabilities thereof. For one of the Ir/IrOₓ microelectrodes, evaluation was continued for 100 days or longer.

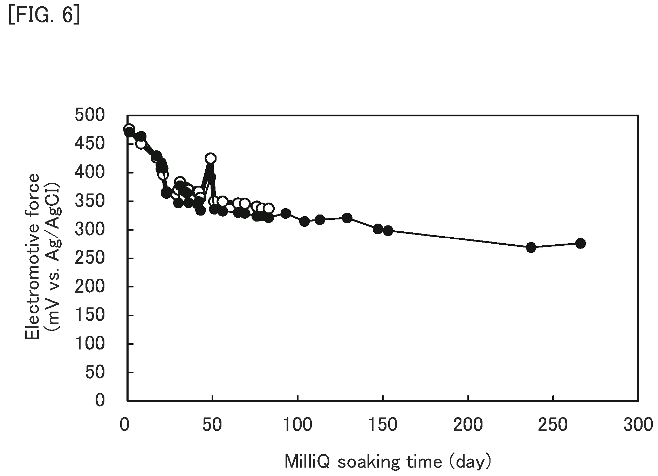

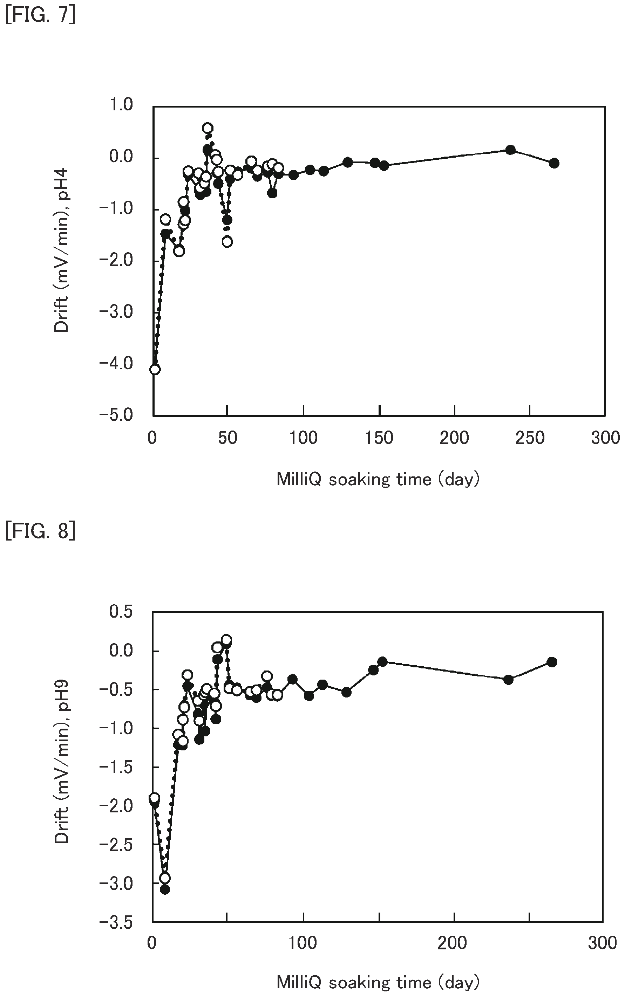

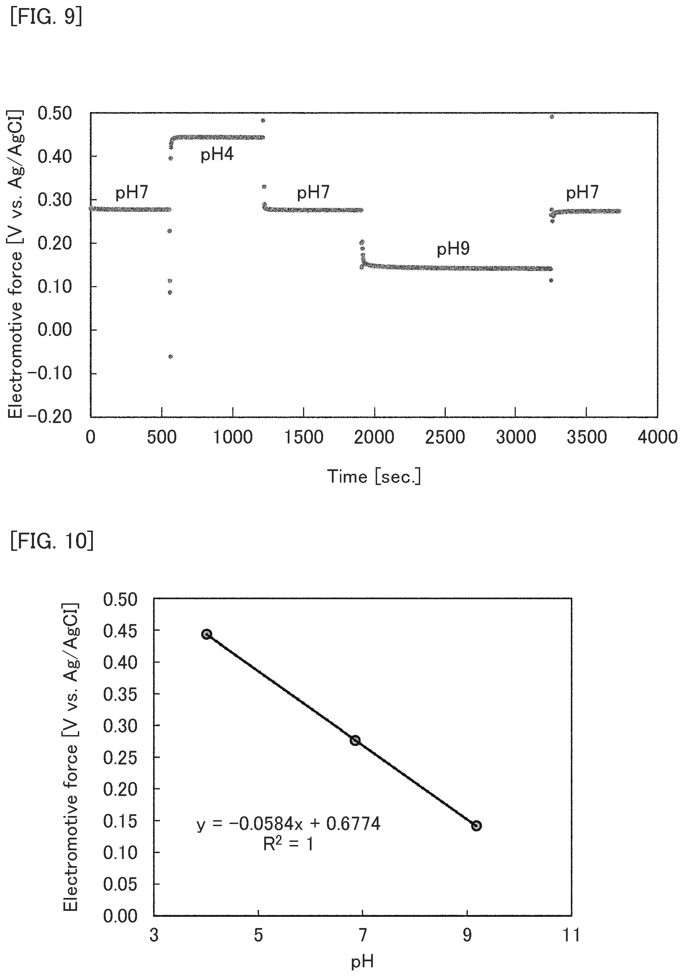

Fig. 6 is a graph illustrating temporal variations of the electromotive forces at a time point after a lapse of 267 days from immediately after the production. In the drawing, the abscissa axis represents MilliQ soaking time (the number of days of immersion in ultrapure water) (day), and the ordinate axis represents Electromotive Force (mV vs. Ag/AgCl). Fig. 7 is a graph representing temporal variations of electromotive force drifts in a pH 4 buffer solution. In the drawing, the abscissa axis represents MilliQ soaking time (the number of days of immersion in ultrapure water) (day), and the ordinate axis represents Drift (mV/min). Fig. 8 is a graph illustrating temporal variations of electromotive force drifts in a pH 9 buffer solution. In the drawing, the abscissa axis represents MilliQ soaking time (the number of days of immersion in ultrapure water) (day), and the ordinate axis represents Drift (mV/min). Fig. 9 is a graph illustrating the electromotive force responses of the Ir/IrOₓ microelectrodes stored in water for 267 days. In the drawing, the abscissa axis represents Time (sec.), and the ordinate axis represents Electromotive force (V vs. Ag/AgCl). Fig. 10 is a graph illustrating the pH responses of the Ir/IrOₓ microelectrodes stored in water for 267 days. In the drawing, the abscissa axis represents pH, and the ordinate axis represents Electromotive force (V vs. Ag/AgCl). Here, the Drift amount represented by the ordinate axis in each of Fig. 7 and Fig. 8 is defined as a value obtained by dividing, by the elapsed time of 5 minutes, a difference between electromotive forces measured at 2 minutes and 7 minutes after the electrode immersion solution was changed from the pH 7 buffer solution to a solution with a different pH value, i.e., an inclination of the electromotive force difference. Note that a drift amount in another graph is also defined in the same manner.

As shown in Fig. 7 and Fig. 8, the electromotive force drifts were large for about 20 days from the start of the evaluation and, under the influence thereof, slope sensitivities exhibited responses larger than a theoretical value (59.2 mV/pH). In addition, as shown in Fig. 6, the variation of the electromotive force was also large. As shown in Fig. 7 and Fig. 8, after about 30 days, the electromotive force drifts became smaller, and the slope sensitivities remained at 55 mV/pH or higher. As also shown in Fig. 6, the electromotive forces exhibited a tendency to gradually decrease, but the variations thereof were small, and the electromotive forces settled at values of about 300 mV vs. Ag/AgCl. In the present examination, as an electrolytic solution inside the reference electrode, 0.1 M KCl solution was used, and the electromotive forces shifted by several tens of millivolts vs. Ag/AgCl, compared to that of a typically used reference electrode using a 3M KCl or saturated KCl solution.

As shown in Fig. 9, potential responses of the Ir/IrOₓ microelectrodes measured 267 days after the start of immersion in the ultrapure water were satisfactory, and electromotive force drifts occurred when the buffer solution was replaced were extremely small.

As shown in Fig. 10, pH responses of the Ir/IrOₓ microelectrodes measured 267 days after the start of immersion in the ultrapure water were satisfactory, and the coefficient of determination (R²) was 1.

In addition, slope sensitivities of the Ir/IrOₓ microelectrodes measured 267 days after the start of immersion in the ultrapure water were 58.4 mV/pH, which is close to a theoretical value (59.2 mV/pH). Furthermore, respective electromotive force drifts in the pH 4 buffer solution and the pH 9 buffer solution were -0.094 mV/min and -0.142 mV/min.

From the foregoing, it was found that, when the Ir/IrOₓ microelectrodes produced through thermal oxidation at 750 °C for 150 minutes were immersed and stored in the ultrapure water, the Ir/IrOₓ microelectrodes exhibited excellent pH responses for 267 days or longer, and had excellent long-term stabilities.

In the examples described later, the electromotive force drifts are intended to reach the levels as shown in Fig. 5 and Fig. 9.

### (2) Examples

### (2-1) Reduction of Electromotive Force Drift by Voltage Application

It was shown that, through conditioning in water, the potential stability of each the Ir/IrOₓ microelectrodes was improved. However, it required a long time of several weeks to reach a sufficiently stable potential. To achieve a sufficient potential stability in a shorter time, the present inventors tried immersion treatment in hydrochronic acid, thermal oxidation using a sodium peroxide (Na₂O₂) catalyst, thermal oxidation without catalyst, analysis of remaining lithium carbonate, and the like. None of the tried methods improved the initial electromotive force at an early stage. Among the tried methods, the method of applying a voltage to the Ir/IrOₓ microelectrode showed a remarkable effect of improving the electromotive force drift. In the present examination, a method of immersing the Ir/IrOₓ microelectrode and a Pt electrode in a pH 7 phosphate buffer solution, and applying a DC voltage for a given time period was developed to optimize voltage application conditions.

### (2-2) Polarity Dependency of Voltage Application.

Using Ir wires with a diameter of 0.127 mm, the present inventors performed thermal oxidation using lithium carbonate as a catalyst at 750 °C for 150 minutes. Then, the present inventors dissolved the lithium carbonate in ultrapure water, confirmed removal thereof by visual inspection, and produced an Ir/IrOₓ microelectrodes (see 1. to 8. described above).

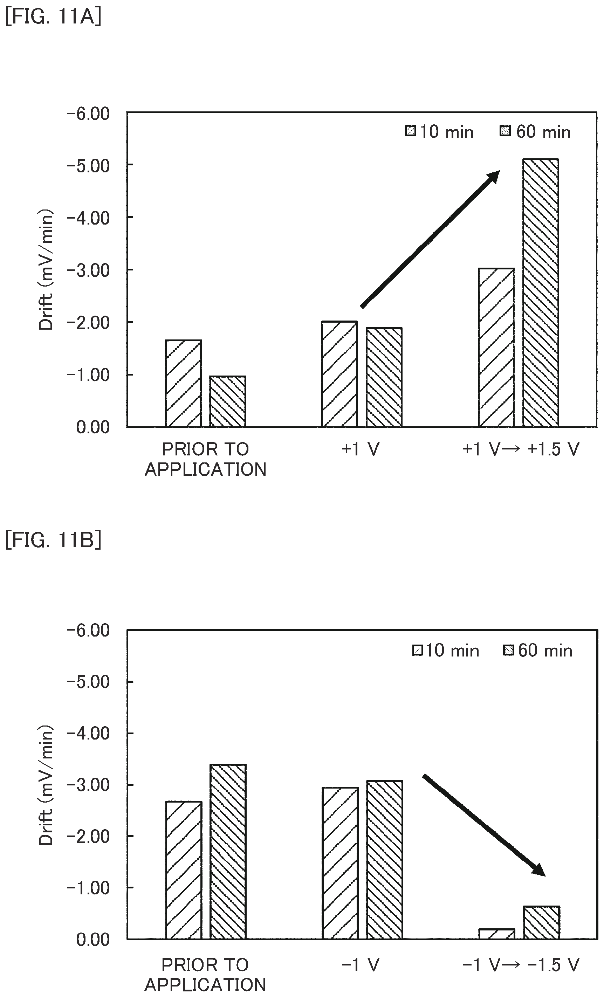

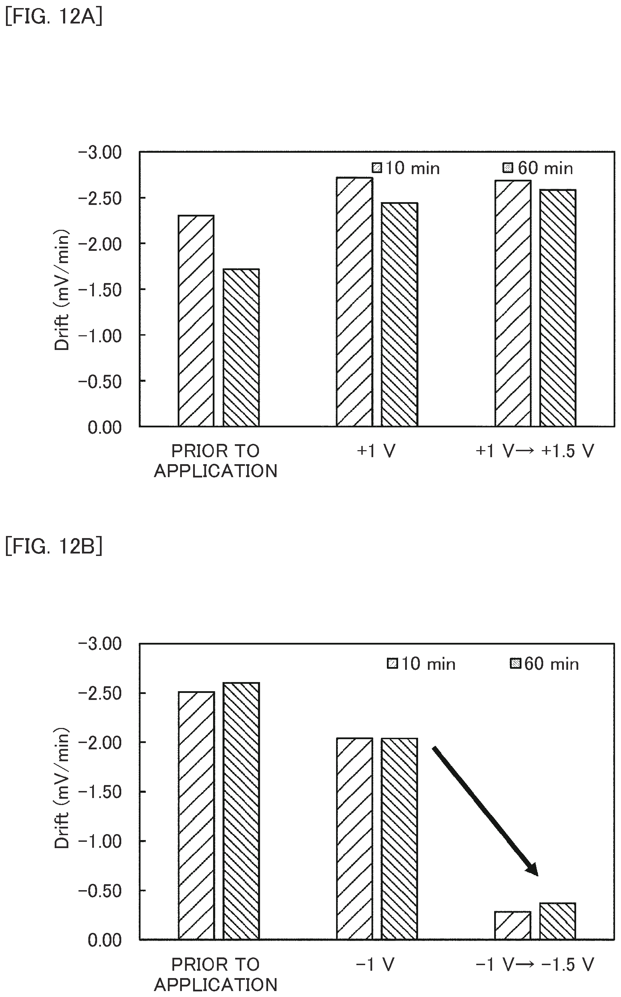

The present inventors applied a +1 V or -1 V voltage to each of the obtained electrodes relative to the counter electrode made of platinum for 10 or 60 minutes, and measured a pH response. On the next day after the application of the ±1 V voltages, the present inventors further applied +1.5 V to the electrode to which +1 V was applied, applied -1.5 V to the electrode to which -1 V was applied, and evaluated the pH responses. Note that, as a result of measuring the applied potential by using the reference electrode, -1.36 V vs. Ag/AgCl was measured with -1.5 V. Fig. 11A, Fig. 11B, Fig. 12A, and Fig. 12B show results of comparing magnitudes of electromotive force drifts of the Ir/IrOₓ microelectrodes before and after voltage applications when the pH 7 buffer solution was replaced with the pH 4 and pH 9 buffer solutions.

Fig. 11A is a graph representing a voltage application effect (positive voltage application) on the electromotive force drift in the pH 4 buffer solution. Fig. 11B is a graph representing a voltage application effect (negative voltage application) on the electromotive force drift in the pH 4 buffer solution. Fig. 12A is a graph representing a voltage application effect (positive voltage application) on the electromotive force drift in the pH 9 buffer solution. Fig. 12B is a graph representing a voltage application effect (negative voltage application) on the electromotive force drift in the pH 9 buffer solution. In each of the drawings, the ordinate axis represents Drift (mV/min).

As shown in Fig. 11B and Fig. 12B, it was found that, in both of the pH 4 buffer solution and the pH 9 buffer solution, the electromotive force drifts remarkably decreased when -1.5 V voltages were applied for 10 minutes and for 60 minutes. Meanwhile, as shown in Fig. 11A and Fig. 12A, when the positive voltages were applied, an effect of reducing the electromotive force drift was not observed. In addition, as shown in Fig. 12B, when a voltage of -1.0 V was applied, the electromotive force drift in the pH 9 butter solution showed a tendency to slightly decrease. However, the effect was limited.

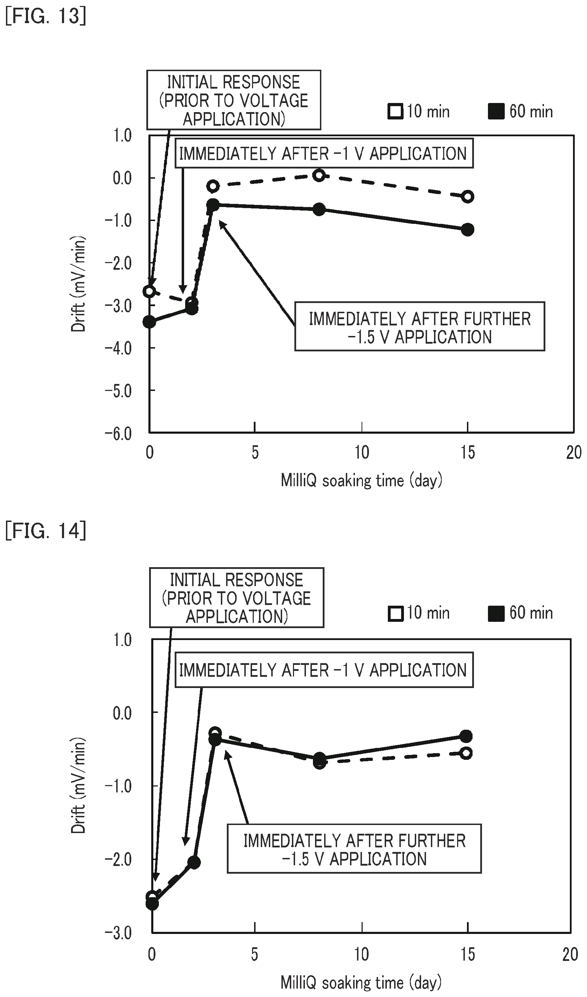

It was examined whether the effect of reducing the drift by applying the -1.5 V voltage was temporary or persistent. After applying the -1.5 V voltages to the Ir/IrOₓ microelectrodes, the present inventors measured pH responses, while storing the Ir/IrOₓ microelectrodes in water, and measured the temporal variations of the electromotive force drifts. Fig. 13 and Fig. 14 show the result thereof.

Fig. 13 is a graph representing a durability of the voltage application effect in the pH 4 buffer solution. Fig. 14 is a graph representing a durability of the voltage application effect in the pH 9 buffer solution. In each of the drawings, the abscissa axis represents MilliQ soaking time (the number of days of immersion in ultrapure water) (day), and the ordinate axis represents Drift (mV/min).

As shown in Fig. 13 and Fig. 14, it was found that, in both of the pH 4 buffer solution and the pH 9 buffer solution, the electromotive force drifts reduced by applying the -1.5 V voltages continued to be maintained for at least about two weeks.

From the foregoing, in the present examination, it was found that, when the -1.5 V voltages were applied to the Ir/IrOₓ microelectrodes relative to the Pt electrodes serving as the counter electrodes, the electromotive force drifts were remarkably reduced thereby, and the effect thereof was maintained for two weeks or longer.

### (2-3) Dependency on Magnitude of Applied Voltage

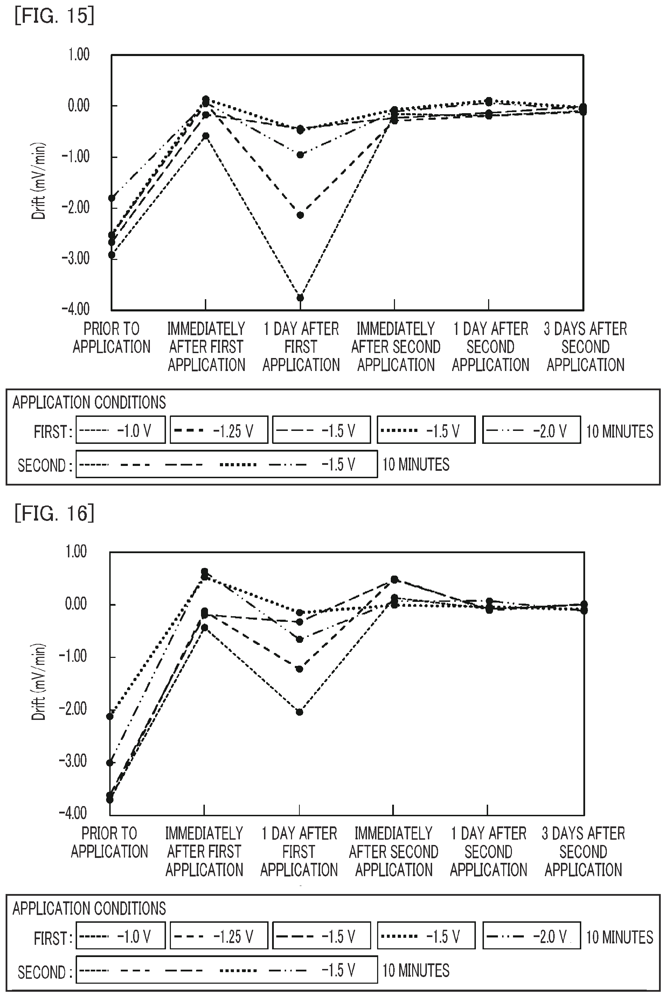

To quantitatively represent the above qualitative description, the present inventors compared respective electromotive force drifts in the pH 4 buffer solution and in the pH 9 buffer solution and the electromotive forces in the pH 7 buffer solution before and after voltage application treatment. Each of Fig. 15, Fig. 16, and Fig. 17 shows the result thereof.

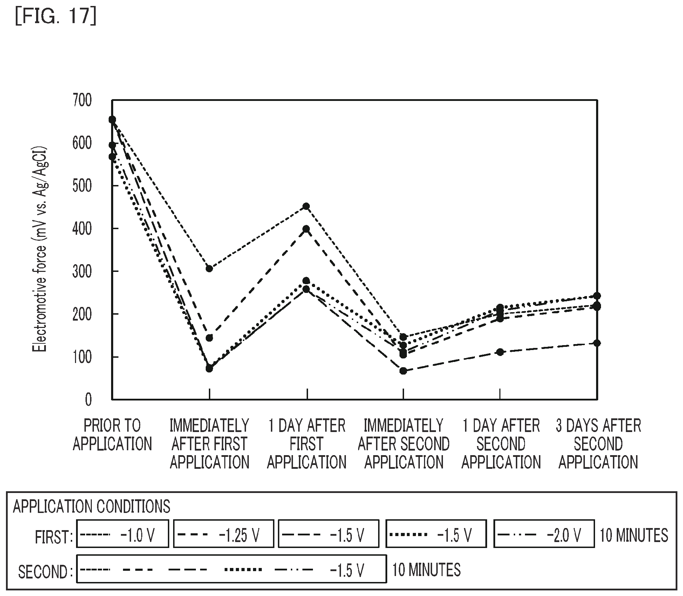

Fig. 15 is a graph representing the voltage application effect on the electromotive force drifts of the Ir/IrOₓ microelectrodes in the pH 4 buffer solution. Fig. 16 is a graph representing the voltage application effect on the electromotive force drifts of the Ir/IrOₓ microelectrodes in the pH 9 buffer solution. In each of the drawings, the ordinate axis represents Drift (mV/min). Fig. 17 is a graph representing the voltage application effect on the electromotive forces of the Ir/IrOₓ microelectrodes in the pH 7 buffer solution. In the drawing, the ordinate axis represents Electromotive force (mV vs. Ag/AgCl).

As shown in Fig. 15 and Fig. 16, when voltages of -1.0 V to -2.0 V were applied to the Ir/IrOₓ microelectrodes and then the Ir/IrOₓ microelectrodes were stored in ultrapure water for 1 day, the electromotive force drifts of the electrodes to which the - 1.0 V voltage and the -1.25 V voltage were applied increased. The magnitude of the electromotive force drift of the electrode to which -1.0 V was applied was larger than that of the electrode to which -1.25 V was applied. Accordingly, it was found that the electromotive force drift suppressing effect depended on the magnitude of the applied voltage and, when the applied voltage was lower than -1.25 V, the electromotive force drift suppressing effect was smaller. As shown in Fig. 15 and Fig. 16, when the second application of the -1.5 V voltage was performed for 10 minutes, the electromotive force drift suppressing effect lasted for at least three days.

As shown in Fig. 17, the electromotive force of the Ir/IrOₓ microelectrode was reduced by the voltage application, but was increased 1 day after the Ir/IrOₓ microelectrode was stored in ultrapure water. As the applied voltage was lower, the reduction of the electromotive force was smaller, and a tendency to maintain the high electromotive force was observed. After the second application of the -1.5 V voltage, all of the electrodes exhibited the tendency for the electromotive forces thereof to increase.

### (2-4) Voltage Application Time Dependency

The present inventors compared a case (i) where, under the voltage application conditions of -1.5 V and 20 minutes, the voltage was continuously applied for 20 minutes to a case (ii) where, after the -1.5 V voltage application for 10 minutes, the the Ir/IrOₓ microelectrode was left to stand for 5 minutes, and then the -1.5 V voltage was applied again thereto for 10 minutes.

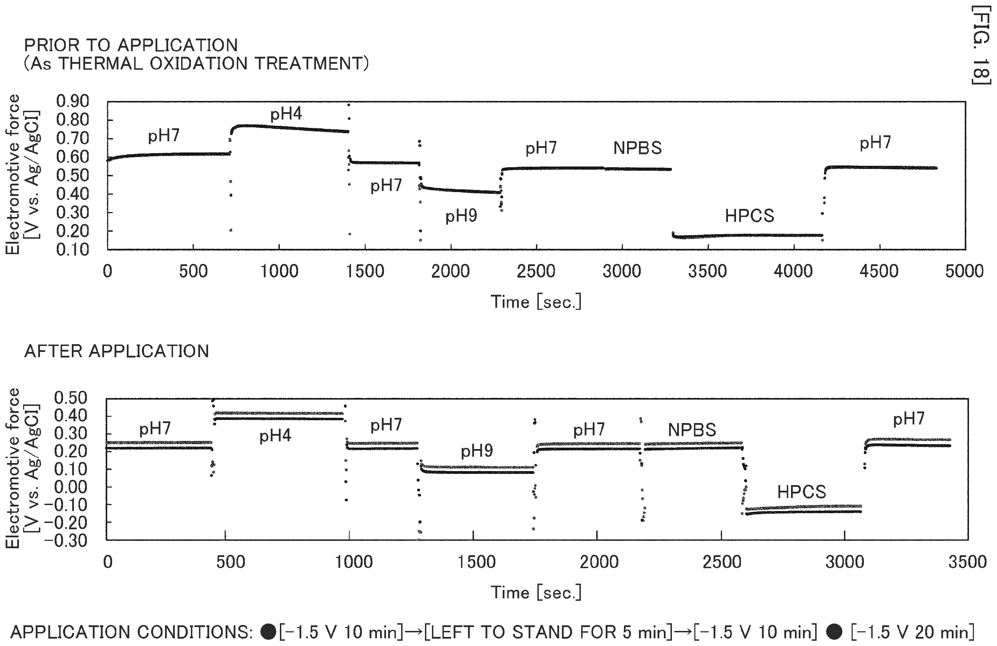

Fig. 18 is a graph illustrating a result of comparing different pH responses of the Ir/IrOₓ microelectrodes. The upper graph in the drawing (upper graph of Fig. 18 in a horizontal layout) indicates the pH responses of the Ir/IrOₓ microelectrodes prior to the voltage application (as thermally oxidized (by As thermal oxidation treatment)). The lower graph in the drawing (lower graph of Fig. 18 in a horizontal layout) indicates the pH responses of the Ir/IrOₓ microelectrodes after the voltage application by the above two methods (i) and (ii) after the thermal oxidation treatment. In either of the graphs, the abscissa axis represents Time [sec.], and the ordinate axis represents Electromotive force (V vs. Ag/AgCl).

As shown in Fig. 18, by each of the above two methods (i) and (ii), the electromotive force drift was reduced after the voltage application, and a stable potential response was obtained. This effect was maintained to last for 6 days after the voltage application.

In terms of minimizing stress and damage caused by the voltage application treatment to the Ir/IrOₓ microelectrodes, the voltage application time is preferably shorter. Accordingly, it was concluded that a preferable voltage application time was 10 minutes. In the present examination, in terms of reducing the electromotive force drift, a voltage application of -1.5 V for 10 minutes was determined to be a current optimum condition. The mechanism of reducing the electromotive force drift by a negative voltage application can conceivably be further optimized by being analyzed and by also considering factors such as a response speed and long-term stability.

### (2-5) Response Speed Improvement Achieved by Shortening Oxidation Time

The present inventors thought that minimizing ion diffusion in a surface of an IrOₓ film and enabling efficient exchange of buffer solutions with different pH values in the surface is important for achieving a higher response speed. Accordingly, the present inventors examined the thinning of the IrOₓ film by shortening an oxidation time with the expectation of planarizing the IrOₓ film.

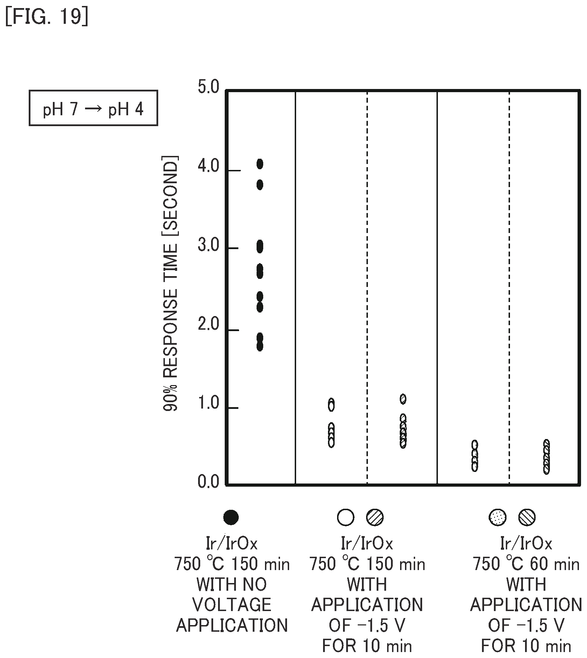

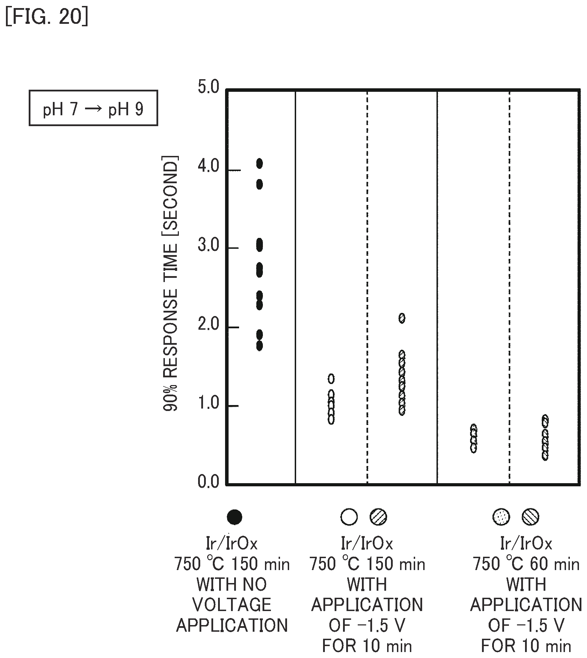

The present inventors compared 90% response times of the Ir/IrOₓ microelectrodes thermally oxidized at 750 °C for 150 minutes or 60 minutes with no voltage application and with a voltage application of -1.5 V for 10 minutes. Note that the 90% response time refers to the time required for a difference between electromotive forces before and after the exchange of solutions with different pH values to reach 90%. Fig. 19 is a graph illustrating the variation of the 90% response time at the time of a change from pH 7 to pH 4. Fig. 20 is a graph illustrating the variation of the 90% response time at the time of a change from pH 7 to pH 9. In either of these graphs, the ordinate axis represents the 90% response time [second].

As shown in Figs. 19 and 20, it was found that when the oxidation time was reduced to 60 minutes to reduce the thickness of the IrOₓ film, the response time was reduced, and the variation was reduced. The 90% response times when a pH 7 buffer solution was replaced with the pH 4 buffer solution and with the pH 9 buffer solution were of a sub-second order of 0.3 to 0.4 seconds and 0.5 to 0.6 seconds, which were approximately the same as those of the Ir/IrOₓ microelectrodes stored in ultrapure water for a long period to have surfaces thereof sufficiently conditioned.

### (2-6) Oxidation Time Dependency of Response Speed

Next, the present inventors calculated the 90% response times from the variation of the potential responses when the Ir/IrOₓ microelectrodes were immersed in the pH buffer solutions, and examined the effect exerted by negative voltage application treatment on the response speed (oxidation time dependency of the response speed).

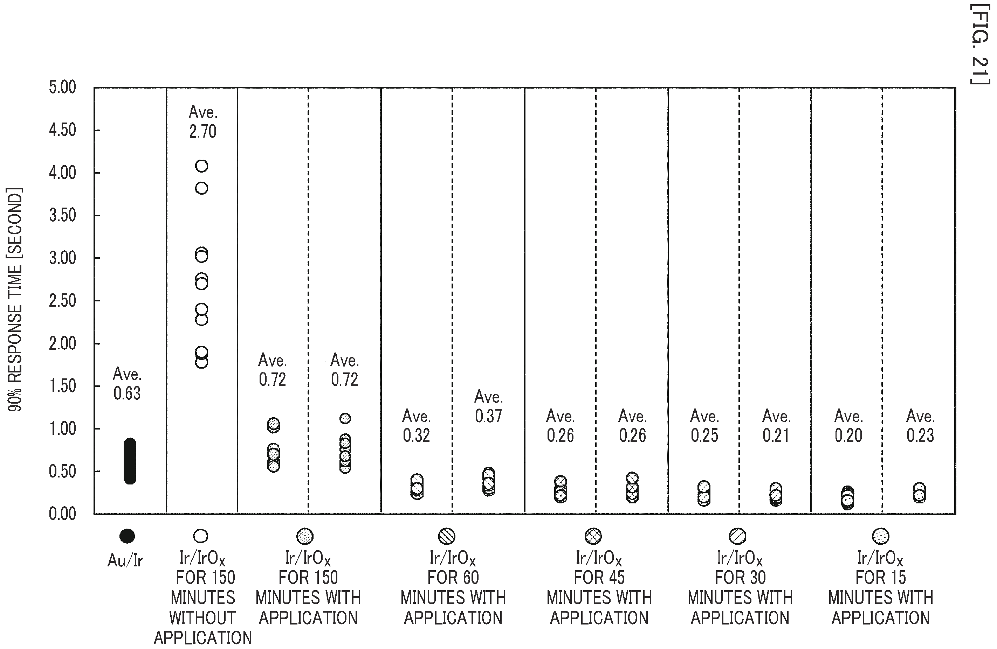

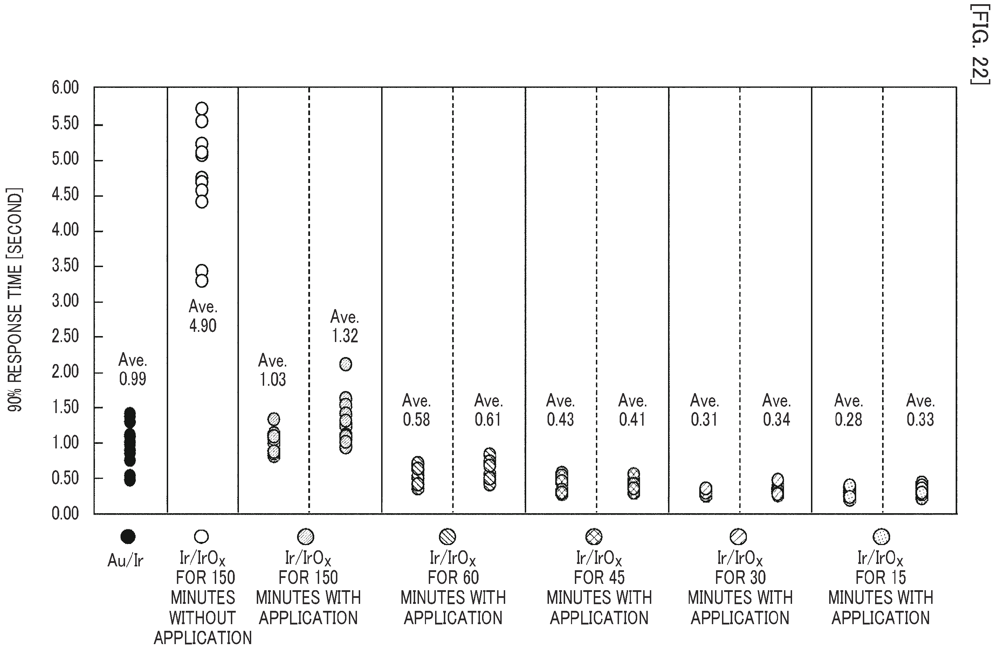

In the present examination, the -1.5 V voltages were applied for 10 minutes to the Ir/IrOₓ microelectrodes treated at a thermal oxidation temperature of 750 °C for thermal oxidation times of 15 minutes, 30 minutes, 45 minutes, 60 minutes, and 150 minutes (expressed as "WITH VOLTAGE APPLICATION" in Figs. 21 and 22), and the 90% response times thereof were determined. Specifically, from real-time response waveforms at 50 counts/sec, an average value of respective stabilized electromotive forces in the pH 4, pH 7, and pH 9 buffer solutions was calculated, and the time required to reach a potential change corresponding to 90% thereof was defined as the 90% response time, which was used as an index of the response speed.

Fig. 21 is a plot diagram illustrating a result of a change from pH 7 to pH 4. Fig. 22 is a plot diagram illustrating a result of a change from pH 7 to pH 9. In either of these graphs, the ordinate axis represents the 90% response time [second]. In Fig. 21 and Fig. 22, a result from the Ir/IrOₓ microelectrode stored in ultrapure water for a long period to have the surface thereof sufficiently conditioned is denoted by Au/Ir as a reference value. A result of performing thermal oxidation treatment for 150 minutes with no voltage application (expressed as "WITHOUT APPLICATION" in Fig. 21 and Fig. 22) is also shown in the same drawings.

As shown in Fig. 21 and Fig. 22, when the voltage was applied (expressed as "WITH APPLICATION" in Fig. 21 and Fig. 22), the 150 minute condition, which is the longest among the examined conditions, exhibited a lowest speed at which 90% was reached, and a tendency was observed in which, under the conditions shorter than 60 minutes, the response speeds were progressively higher.

### (2-7) Consideration of Mechanism of Electromotive Force Stabilization by -1.5 V Application

The present inventors immersed the Ir/IrOₓ microelectrodes to which no charge was applied in ultrapure water, intermittently measured pH responses, and examined the temporal variations of a pH characteristic. As a result, the electromotive force drift of IrOₓ decreased over several weeks to several months, and the value of the electromotive force approached a constant value. From this, it can be considered that, immediately after the formation of Ir/IrOₓ, the Ir/IrOₓ films are in a non-equilibrium state and, due to a relaxation phenomenon with a large time constant of several weeks to several months, an Ir/IrOₓ microelectrode system approaches an equilibrium state. It can also be considered that, by applying a -1.5 V voltage to the Ir/IrOₓ microelectrode by using a Pt electrode as a counter electrode in a pH 7 phosphate buffer solution, this relaxation phenomenon rapidly proceeds to allow the equilibrium state to be obtained in a short time.

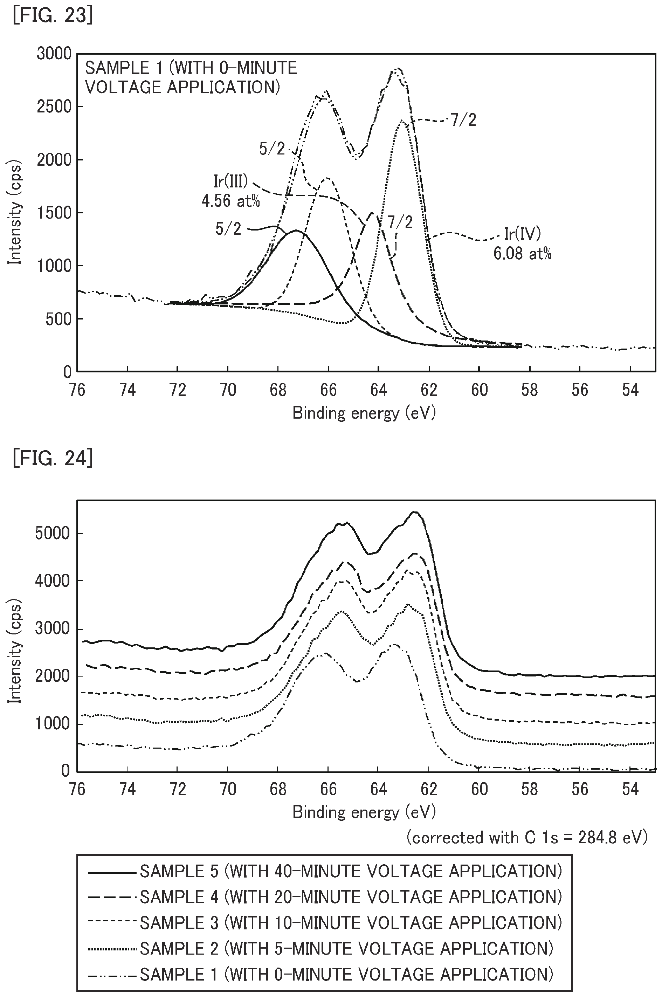

Fig. 23 is a spectrum diagram illustrating a result of an X-ray photoelectron spectroscopy (XPS) analysis of an iridium oxide film without voltage application. In the drawing, the abscissa axis represents Binding energy (eV), and the ordinate axis represents Intensity (cps).

As shown in Fig. 23, the literature values of the Binding energy of iridium are Ir(metal): 60.8 eV, Ir(IV): 61.5 eV, and Ir(III): 62.4 eV. It is known that, in the XPS spectrum of IrO₂ having a rutile-type crystal structure, an Ir(IV) 4f peak of tetravalent iridium has an asymmetrical shape in which a high-energy-side tail is gently sloped, and the intensity is high. However, even though a conventional Doniach-Sunjic (DS) function is used, this spectrum shape cannot completely be fitted. As analyzed in several theses, fitting can be achieved by using the Ir(III) 4f peak of trivalent iridium, and a mixture ratio between tetravalent iridium oxide and trivalent iridium oxide (IrO₂ and Ir₂O₃), which are in different oxidation states, and the like are analyzed. Meanwhile, even without assuming the presence of trivalent iridium oxide (Ir₂O₃), theoretical calculation has shown that, only with tetravalent iridium oxide (IrO₂), there is an energy level (satellite level 1) unoccupied with electrons at a position about 1 eV higher than the Fermi level (EF), and there is an energy level (satellite level 2) occupied with electrons at a position about 2 eV lower than EF (Literature 1: Verena Pfeifer, Travis E. Jones, Juan J. Velasco Velez, Cyriac Massue, Rosa Arrigo,d Detre Teschner, Frank Girgsdies, Michael Scherzer, Mark T. Greiner, Jasmin Allan, Maike Hashagen, Gisela Weinberg, Simone Piccinin, Michael Havecker, Axel Knop-Gericke and Robert Schlogl, Surf. Interface Anal., 2016, 48, 261-273).

When electrons at the Fermi level are excited to the satellite level 1, a peak of the satellite level 1 appears at Binding Energy which is about 1 eV higher than the Ir(IV) 4f peak of the XPS spectrum. In addition, when electrons are excited from the satellite level 2 occupied with electrons to the satellite level 1, a peak of the satellite level 2 appears at Binding Energy which is about 3 eV higher than the Ir(IV) 4f peak. By using the peaks of the satellite levels 1 and 2, it is possible to fit the Ir(IV) 4f peak only with tetravalent iridium.

Meanwhile, it has been reported that, in the XPS spectrum of IrO₂ with an amorphous structure, the shape of the Ir(IV) 4f peak of tetravalent iridium becomes broader than the peak of IrO₂ with the rutile-type crystal structure, and accurate fitting to experiment data can be achieved by using the Ir(III) 4f peak of trivalent iridium in addition to the two satellite peaks mentioned above (Literature 1 mentioned above). As a mechanism by which Ir₂O₃ is formed in IrO₂ with the amorphous structure, generation of Ir vacancy is described, which causes a defect in an electronic state. According to theoretical calculation, by the generation of Ir vacancy, a new energy level is produced at a position of 62.2 eV in Ir 4f Binding Energy. This is based on Ir(III), and a satellite level is formed at a Binding Energy position ~1 eV higher than the Ir 4f spectrum. This can explain why the intensity is higher on the high energy side in the shape of the Ir(IV) 4f peak of IrO₂ with the amorphous structure.

The discussion described above is based on XPS and near-edge X-ray absorption fine structure (NEXAFS) experimental results and fitting results thereof, and relates to the vicinity of the surface of iridium oxide (XPS: several nanometers, NEXAFS: ~100 nm). The IrOₓ film produced in the present examination had a granular shape and a columnar shape, and was considered as a locally crystalline film. The XPS experimental result suggested that the film was a mixture of tetravalent iridium (IrO₂) and trivalent iridium (Ir₂O₃).

For a pH response mechanism of iridium oxide, various models have been proposed. The following three equibrium states of an oxidation-reduction reaction of iridium oxide related to the pH response of an electromotive force are considered (Literature 2: V T. Y. Kim, S. Yang, Fabrication method and characterization of lectrodeposited and heat-treated iridium oxide films for pH sensing, Sens. Actuators B: Chem. 196 (2014) 31-38).

Ir₂O₃ + 6H⁺ + 6e⁻ ⇔ 2Ir + 3H₂O ... (1)

IrO₂ + 4H⁺ + 4e⁻ ⇔ Ir + 2H₂O ... (2)

2IrO₂ + 2H⁺ + 2e⁻ ⇔ Ir₂O₃ + H₂O ... (3)

Since each of the above reactions is a one-electron reaction with respect to protons, an electromotive force E generated at the interface between the iridium oxide and the sample solution is represented by the Nernst equation in Expression (4), which is consistent with the experimental results obtained thus far. $E = {E}_{0} - 2.303 \left(Rt/nF\right) pH = {E}_{0} - 0.059 pH$ (4) where E represents an oxidation-reduction potential [mV], E₀ represents a standard potential [mV], R represents a gas constant (8.314 JK⁻¹ mol⁻¹), T represents an absolute temperature, F represents the Faraday's constant (96,480 C mol⁻¹), n represents an oxidation state, and pH represents a pH value.

When a -1.5 V voltage is applied to the Ir/IrOₓ microelectrode by using a Pt electrode as a counter electrode in a pH 7 phosphate buffer solution, in the Ir/IrOₓ microelectrode, a reduction reaction proceeds. Therefore, Expressions (1) to (3) shown above become Expressions (5) to (6).

Ir₂O₃ + 6H⁺ + 6e⁻ → 2Ir + 3H₂O ... (5)

IrO₂ + 4H⁺ + 4e⁻ → Ir + 2H₂O ... (6)

2IrO₂ + 2H⁺ + 2e⁻ → Ir₂O₃ + H₂O ... (7)

As can be seen from the above expressions, this reaction requires contact with an aqueous solution, and therefore the reaction from (5) to (7) proceeds only in the IrOₓ surface. This is also suggested to be a surface-only reaction, since, when the -1.5 V voltage is applied, a flowing current rapidly decays.

Fig. 24 is a spectrum diagram indicating XPS spectra of the Ir/IrOₓ microelectrodes to which -1.5 V voltages were applied for 0 minutes, 5 minutes, 10 minutes, 20 minutes, and 40 minutes. In the drawing, the abscissa axis represents Binding energy (binding energy) (eV), and the ordinate axis represents Intensity (cps).

As shown in Fig. 24, when attention is focused on an Ir(IV) 4f 7/2 peak (see Fig. 23), it can be seen that the shape of the peak is asymmetrical, the high-energy-side tail is gently sloped, and the intensity is increased. This is particularly notable in the electrode to which the -1.5 V voltage was applied for 40 minutes, and the shoulder of a new peak is observed in the vicinity of 63 eV. Table 1 shows the result of analysis performed on the assumption that the peak position of Binding energy was free.

**[Table 1]**

| | | Ir/IrOₓ Microelectrodes | | | | |
|---|---|---|---|---|---|---|
| -1.5 V Application time [min] | | 0 | 5 | 10 | 20 | 40 |
| Peak Eb[eV] | metal | - | - | - | - | - |
| | IV | 63.0 | 62.5 | 62.4 | 62.4 | 62.3 |
| | III | 64.2 | 63.8 | 63.6 | 63.7 | 63.6 |
| Deviation from Literature Peak | metal | - | - | - | - | - |
| | IV | 1.54 | 1.02 | 0.89 | 0.85 | 0.80 |
| Eb | III | 1.82 | 1.37 | 1.16 | 1.28 | 1.20 |
| Peak | | | | | | |
| ΔEb[eV] | | | | | | |
| IV/III Ratio | | 1.23 | 1.15 | 1.11 | 1.07 | 0.77 |
| Metal/III Ratio | | - | - | - | - | - |

As shown in Table 1, it can be seen that, as the time period during which the - 1.5 V voltage was applied was increased, the proportion of tetravalent iridium (IrO₂) (Ir(IV)) decreased, and the proportion of trivalent iridium (Ir₂O₃) (Ir(III)) increased. Ir(IV)/Ir(III), which was 1.23 before voltage application, decreased to 0.77 after the application of -1.5 V for 40 minutes. This may be conceivably because, due to the application of -1.5 V, the reaction given by Expression (7) proceeded. Meanwhile, as previously described, Binding Energy of Ir (metal) was 60.8 eV, and no peak is observed in the vicinity of 60.8 eV in Fig. 23, and voltage application time dependency is not observed, either. Therefore, it is considered that the reaction in (5) and (6) has scarcely proceeded. Using iridium oxide IrOₓ for the surface is supported since, by applying the -1.5 V voltage, the electromotive force of the Ir/IrOₓ microelectrode is stabilized. When the -1.5 V voltage application time period is 10 minutes (Ir(IV)/Ir(III) = 1.11), the present invention can exert the effects of achieving at least one of the suppression of the electromotive force drift during the pH measurement and the high response speed, while allowing such a composite electrode (pH sensitive electrode) to be easily obtained. It is considered that, as long as the application time period is 5 minutes or longer, i.e., Ir(IV)/Ir(III) is 1.15 or less, the same effects can be exerted.

The foregoing has shown that, when the -1.5 V voltage is applied, the proportion of Ir(III) increases in the vicinity of the surface of IrOₓ. In addition, it is reported through theoretical considerations in the literature that a physical image of the generation of trivalent iridium (Ir₂O₃) in tetravalent iridium (IrO₂) is generation of an electron state defect due to Ir vacancy. As a result, an energy level unoccupied with electrons was generated at a position about 1 eV higher than the Fermi level, and electrons are excited from the Fermi level or from an energy level occupied with electrons at a position about 2 eV lower than the Fermi level to allow precise fitting of the shape of the Ir(IV) 4f peak by the XPS. It is also considered that the generation of the new energy level at a position about 1 eV higher than the Fermi level plays an important role in smooth electron exchange with a valence band.

When the IrOₓ is in contact with the aqueous solution and in equilibrium, the Fermi levels of IrOₓ and the aqueous solution are constant. When a hydrogen ion concentration in the aqueous solution changes to change an electrochemical potential, the Fermi level of the aqueous solution changes and new equilibrium is reached, and consequently electron transfer occurs according to Expressions (1) to (3). At this time, when the electron transfer does not smoothly occur, the electromotive force is not stabilized to change (drift) with time. When the electron transfer smoothly proceeds via an energy level based on the electron state defect present in the vicinity of the surface of IrOₓ, equilibrium can quickly be reached. The -1.5 V voltage application increases the proportion of Ir(III) in the vicinity of the surface of IrOₓ. Therefore, it can be considered that the density of the electron state defects increases to produce a new energy level higher than the Fermi level and function to allow electron exchange to be smoothly performed via the new energy level.

It is considered that, immediately after the formation of IrOₓ, the proportion of IrO₂ is relatively high, and accordingly the density of the defects is low, and electron transfer when the electrochemical potential of the aqueous solution changes is not smooth to cause an electromotive force drift. It is considered that, when the Ir/IrOₓ microelectrode is stored in the aqueous solution, and potential measurement is intermittently repeated, hydroxide is formed on the IrOₓ surface, and the energy level based thereon is formed. In addition, it is also considered that, by the -1.5 V voltage application, the ratio of Ir (III) is increased according to Expression (7) to increase the defect density.

### (2-8) Relationship between Electromotive Force and pH Shown by Ir/IrOₓ Microelectrode

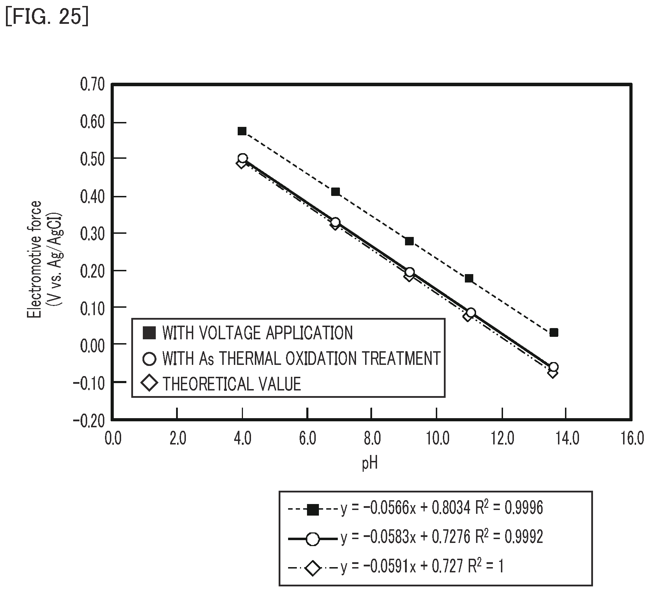

By using the Ir/IrOₓ microelectrode subjected only to thermal oxidation treatment and the Ir/IrOₓ microelectrode to which voltage application was performed after the thermal oxidation treatment, the present inventors examined a relationship between the electromotive force and pH in a range of pH 4 to pH 14. For these electrodes, the thermal oxidation treatment was performed at 750 °C for 60 minutes, and the voltage application was performed at -1.5 V for 10 minutes. Fig. 25 is a graph illustrating the relationship between the electromotive force and pH shown by each of the Ir/IrOₓ microelectrodes. In the drawing, the abscissa axis represents pH, and the ordinate axis represents Electromotive force (V vs. Ag/AgCl).

As shown in Fig. 25, the Ir/IrOₓ microelectrode to which the voltage application was performed after the thermal oxidation treatment not only exhibited a linear response, but also has the measured potential coincident with a theoretical value.

While the detailed description has been given heretofore of the method for manufacturing a pH sensitive electrode, the measuring method employing a pH sensitive electrode, and the pH sensitive electrode according to the present invention by using the embodiments and examples, the present invention is not limited to the embodiments and examples described above, and includes various modifications. For example, the embodiments described above have been described in detail for easy understanding of the present invention, and are not necessarily limited to including all the components described above. In addition, it is also possible to replace some of the components of one of the embodiments with the components of another embodiment or add the components of the other embodiment to the components of the one embodiment. Moreover, it is possible to perform, with respect to some of the components of each of the embodiments, addition, deletion, or replacement with other components. These embodiments and modification thereof are included within the scope and gist of the present invention, and are also encompassed within the scope of the inventions described in the claims and the equivalents thereof.

### List of Reference Signs

1: Measuring device
2: Chamber
3: First measuring unit
4: Second measuring unit
41: Composite electrode
42: pH sensitive electrode
43: Counter electrode
44: Inlet
45: Outlet

## Claims

1. A method for manufacturing a pH sensitive electrode, the method comprising:
a manufacturing step of manufacturing a composite electrode made of iridium and iridium oxide by thermal oxidation treatment; and
a first application step of applying a voltage to the composite electrode in a state where the composite electrode and a counter electrode facing the composite electrode are immersed in a solution so as to maintain a negative state with respect to the counter electrode.

2. The method for manufacturing the pH sensitive electrode according to claim 1,
wherein the composite electrode after the first application step has an Ir^{IV}/Ir^{III} ratio of 1.15 or less at at least a surface thereof when, of the iridium oxide, tetravalent iridium is Ir^{IV} and trivalent iridium is Ir^{III}.

3. The method for manufacturing the pH sensitive electrode according to claim 1 or 2,
wherein the first application step is performed with a voltage of -1 V to -2 V for an application time of 2 minutes to 90 minutes.

4. A measuring method employing a pH sensitive electrode, the measuring method comprising:
a second application step of, before pH of a measurement target is measured using a composite electrode made of iridium and iridium oxide and manufactured by thermal oxidation treatment, applying a voltage to the composite electrode in a state where the composite electrode and a counter electrode facing the composite electrode are immersed in a solution so as to maintain a negative state with respect to the counter electrode.

5. The measuring method using the pH sensitive electrode according to claim 4,
wherein the composite electrode after the second application step has an Ir^{IV}/Ir^{III} ratio of 1.15 or less at at least a surface thereof when, of the iridium oxide, tetravalent iridium is Ir^{IV} and trivalent iridium is Ir^{III}.

6. The measuring method using the pH sensitive electrode according to claim 4 or claim 5,
wherein the second application step is performed with a voltage of -1 V to -2 V for an application time of 2 minutes to 90 minutes.

7. A measuring device comprising, within the same chamber:
a first measuring unit that measures a component of a substance contained in a measurement target; and
a second measuring unit that measures pH of the measurement target,
wherein the second measuring unit includes a composite electrode made of iridium and iridium oxide, and a counter electrode facing the composite electrode.

8. The measuring device according to claim 7,
wherein the composite electrode is a pH sensitive electrode that has an Ir^{IV}/Ir^{III} ratio of 1.15 or less at at least a surface thereof when, of the iridium oxide, tetravalent iridium is Ir^{IV} and trivalent iridium is Ir^{III}.

9. A pH sensitive electrode, which is a composite electrode made of iridium and iridium oxide,
wherein the pH sensitive electrode has an Ir^{IV}/Ir^{III} ratio of 1.15 or less at at least a surface thereof when, of the iridium oxide, tetravalent iridium is Ir^{IV} and trivalent iridium is Ir^{III}.

10. The pH sensitive electrode according to claim 9,
wherein a band energy structure of the iridium oxide has an energy level unoccupied with electrons at a position 1 eV higher than a Fermi level.

11. The pH sensitive electrode according to claim 9 or 10,
wherein an average film thickness of the iridium oxide is 5 µm or less.
